# EUROPÄISCHE PATENTSCHRIFT

(11) **EP 0 846 030 B1**
(45) Veröffentlichungstag und Bekanntmachung des Hinweises auf die Patenterteilung: **09.04.2003**
(21) Anmeldenummer: 96930064.9
(22) Anmeldetag: 21.08.1996
(51) Int. Cl.: B01J 35/04, B01J 35/02, F01N 3/28

(54) **VERFAHREN ZUM HERSTELLEN EINES WABENKÖRPERS AUS ZUMINDEST ZUM TEIL SCHICHTARTIG AUFGEBAUTEN METALLBLECHLAGEN**
PROCESS FOR MANUFACTURING A HONEYCOMBED BODY FROM AT LEAST PARTIALLY STRATIFIED SHEET METAL LAYERS
PROCEDE DE FABRICATION D'UN CORPS A NIDS D'ABEILLES COMPOSE DE COUCHES DE TOLES METALLIQUES AU MOINS PARTIELLEMENT STRATIFIEES

(30) Priorität: 22.08.1995 DE 19530850
(43) Veröffentlichungstag der Anmeldung: 10.06.1998
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); WIERES, Ludwig, D-51491 Overath (DE)
(74) Vertreter: Kahlhöfer, Hermann, Dipl.-Phys.
(86) Internationale Anmeldenummer: EP9603677
(87) Internationale Veröffentlichungsnummer: WO97007890

(56) Entgegenhaltungen:
- EP-A- 0 201 614
- EP-A- 0 279 159
- EP-A- 0 389 750
- DE-U- 8 412 768
- DE-U- 8 900 467

## Beschreibung

Die vorliegende Erfindung bezieht sich auf ein Verfahren zum Herstellen eines Wabenkörpers aus lagenweise geschichteten und/oder gewickelten Metallblechen nach dem Oberbegriff des Anspruchs 1.

Wabenkörper werden insbesondere als Katalysator-Trägerkörper zur Umsetzung von Abgasen aus Verbrennungskraftmaschinen verwendet. Solche Wabenkörper sind beispielsweise durch die WO 89/07488 bekannt. Solche Katalysator-Trägerkörper unterliegen hohen thermischen und mechanischen Belastungen. Neben der thermischen und mechanischen Belastung des Wabenkörpers ist dieser den im Abgas vorkommenden aggressiven Gaskomponenten ausgesetzt. Die aggressiven Gaskomponenten können zu einer Korrosion des Wabenkörpers führen. Es ist daher wünschenswert, Wabenkörper aus Metallblechen herzustellen, die korrosionsbeständig sind.

Durch die EP 0 159 468 B1 ist es bereits bekannt, Wabenkörper aus Stahlblechen mit einem hohen Aluminiumgehalt herzustellen. Die Herstellung eines Wabenkörpers aus einem solchen Werkstoff ist jedoch aufgrund der schlechten Walzbarkeit von Stahl mit hohem Aluminiumanteil problematisch und mit hohen Kosten verbunden. und/oder gewickelt worden sind, werden diese einer späteren Wärmebehandlung unterzogen. Durch die Wärmebehandlung werden die Metallbleche weitgehend homogenisiert. Es wurde nun festgestellt, daß bei der Herstellung von Wabenkörpern, insbesondere mit einem relativ großen Querschnitt, die Metallbleche mit geschichtetem Aufbau aufweisen, die Verbindungen der Blechlagen untereinander und/oder mit einem den Wabenkörper umgebenden Mantel nicht immer sichergestellt werden kann. Eine sichere Verbindung der Blechlagen untereinander und/oder mit einem den Wabenkörper umgebenden Mantelrohr ist jedoch für die mechanische Festigkeit des Wabenkörpers von großer Bedeutung. Es wurde erkannt, daß bei einer Wärmebehandlung des Wabenkörpers ein Volumenrückgang der Metallblechlagen mit geschichtetem Aufbau eintreten kann. Der Volumenrückgang der Bleche mit einem geschichteten Aufbau wird darauf zurückgeführt, daß das Aluminium, welches eine äußere Schicht des Metallblechs bildet, während einer Wärmebehandlung in die erste Schicht aus Chrom enthaltenden Stahl hinein diffundiert. Das in die Schicht aus Chrom enthaltendem Stahl hinein diffundierte Aluminium vergrößert das Volumen der Schicht nicht jedoch nicht in dem Ausmaß, wie der Volumenrückgang der Aluminiumschicht eintritt. Außerdem weisen geschichtete Bleche während des Homogenisierens nur eine geringe Elastizität auf.

Hiervon ausgehend liegt der vorliegenden Erfindung die Aufgabe zugrunde, ein gattungsgemäßes Verfahren anzugeben, bei dem der durch die Homogenisierung der Bleche eintretende Volumenrückgang kompensiert wird, so daß trotzdem hochbelastbare Verbindungen zwischen den Blechen entstehen.

Die Lösung dieser Aufgabe erfolgt gemäß dem kennzeichnenden Teil des Anspruchs 1 dadurch, daß durch an sich bekannte Maßnahmen - wie unterschiedliche Amplituden gewellter Blechlagen, Schrägverlauf der Wellen bei Anlage zweier gewellter Blechlagen aneinander, Anordnung von Mikrostrukturen auf den Blechlagen und dergleichen - teilweise Abweichungen von der zur Kanalbildung erforderlichen, im Prinzip regelmäßigen Struktur in der Weise lagen zumindest zum Teil zunächst aus einem geschichteten Material bestehen, welches mindestens eine Schicht aus Chrom enthaltendem Stahl und mindestens eine im wesentlichen Aluminium enthaltende Schicht aufweist, die bei einer späteren Wärmebehandlung durch Diffusion weitgehend homogenisiert werden. Dabei soll der durch die Homogenisierung der Bleche eintretende Volumenrückgang kompensiert werden, so daß trotzdem hochbelastbare Verbindungen zwischen den Blechen entstehen.

Diese Aufgabe wird erfindungsgemäß durch ein Verfahren mit den Merkmalen des Anspruchs 1 gelöst. Vorteilhafte Weiterbildungen sind Gegenstand der Unteransprüche.

Zur Vermeidung von großen Bereichen, in denen die Blechlagen untereinander und/oder mit dem Mantel nicht oder nur schwach verbunden werden aufgrund einer Volumenänderung während einer Wärmebehandlung der lagenweise geschichteten und/oder gewickelten Metallbleche wird nach dem erfindungsgemäßen Verfahren vorgeschlagen, daß durch Maßnahmen die Gesamtfläche der Berührungsstellen (9, 15) Zwischen den Blechlagen (2, 3, 3a, 3b) verringert wird. Hierbei wird der Wabenkörper mit einer solchen Vorspannung in einem Mantelrohr eingesetzt, daß bei der Wärmebehandlung die Berührungsstellen zwischen den Blechlagen in Kontakt bleiben. Durch diese Verfahrensführung wird ein Wabenkörper geschaffen, der durch die Wahl des Werkstoffes der Blechlagen korrosionsbeständig ist und desweiteren eine hohe thermische und mechanische Stabilität aufweist. Durch die die Elastizität des Wabenkörpers vor und bei der Wärmebehandlung erhöhende Struktur und das Einbringen des Wabenkörpers mit einer Vorspannung in ein Mantelrohr wird trotz eventuell nur geringer Elastizität der verwendeten Materialien während der Wärmebehandlung stets der Kontakt der Berührungsstellen zwischen den Blechlagen sichergestellt wird. Die Sicherstellung des Kontaktes der Berührungsstellen zwischen den Blechlagen

So beschreibt die EP 0 220 468 B 1 verschiedene Arten von Doppelwellungen, die in gewellte und/oder glatte Blechlagen eingebracht werden können. Indem einem gewellten Blech Wellenberge unterschiedlicher Amplitude gegeben werden, bildet nur ein Teil der Wellenmaxima Berührungsstellen mit benachbarten Blechlagen.

Aus der EP 0 245 737 B1 war es schon bekannt, zwei gewellte Blechlagen ohne Zwischenlage einer glatten Blechlage aneinander anliegen zu lassen; dies wurde dadurch ermöglicht, daß die durch die Wellungen gebildeten Kanäle in den beiden Blechlagen nicht parallel zueinander, sondern unter einem kleinen Winkel verlaufen. Als zusätzlicher Vorteil wurde dabei jedoch vor allem angesehen, daß die durch die Wellungen gebildeten Kanäle sich untereinander kreuzen und miteinander kommunizieren, was zu einer Verwirbelung der Gase und damit einer besseren Kontaktierung der Oberflächen führen sollte.

Schließlich sind aus der EP 0 454 712 B1 schon Mikrostrukturen auf den Blechlagen von Wabenkörpern bekannt. Gemäß Seite 3, Zeilen 5 bis 8 dieser Entgegenhaltung kann die Mikrostruktur aus Rillen, Sicken, Noppen, Nuten oder dergleichen bestehen, welche sich quer oder im Winkel zur Strömungsrichtung erstrecken und nach einer oder beiden Seiten aus der Blechoberfläche hervorstehen. Mit derartigen Mikrostrukturen sollte ein günstiger Einfluß auf die mikroskopische Durchmischung in den einzelnen Kanälen eines Wabenkörpers erzielt und damit die katalytische Wirksamkeit erhöht werden. Ferner sollte ein formschlüssiges Ineinandergreifen dieser Mikrostrukturen in den Berührungsbereichen der Bleche beim Wickeln, Schichten oder Verschlingen erzielt werden, was sich günstig auf das spätere Verlöten von Berührungsbereichen auswirken sollte.

Durch die erfindungsgemäße Kombination der Verfahrensschritte wird ein Wabenkörper geschaffen, der korrosionsbeständig ist und des weiteren eine hohe thermische und mechanische Stabilität aufweist. Durch die die Elastizität des Wabenkörpers vor und bei der Wärmebehandlung erhöhende Struktur und das Einbringen des Wabenkörpers mit einer Vorspannung in ein Mantelrohr wird trotz eventuell nur geringer Elastizität der verwendeten Materialien während der Wärmebehandlung stets der Kontakt der Berührungsstellen zwischen den Blechlagen sichergestellt. Das ist auch für die Ausbildung der Verbindungen zwischen den Blechlagen von Bedeutung.

Vorteilhafte Weiterbildungen sind in den Unteransprüchen angegeben.

Durch die unterschiedliche Richtung der Mikrostrukturen gemäß den Ansprüchen 2 bis 4 läßt sich die Verklammerung der Blechlagen untereinander beeinflussen. Die Mikrostrukturen können auch unterschiedliche Ausprägungen bzw. Konturen aufweisen, so daß ein Ineinandergreifen benachbarter Mikrostrukturen vermieden wird. Die Vermeidung der mechanischen Verklammerung durch formschlüssiges Ineinandergreifen erhöht die Flächenpressung an den Berührungsstellen.

Insbesondere bei spiralig gewickelten Wabenkörpern kann es aber von Vorteil sein, wenn die Blechlagen untereinander durch formschlüssig ineinandergreifende Strukturen benachbarter Blechlagen miteinander verklammert werden. Hierdurch können sich die Blechlagen auch bei nur sehr geringer Vorspannung während der Wärmebehandlung nicht gegeneinander verschieben, insbesondere nicht teleskopieren. Das Verklammern kann auch nach der Homogenisierung der Bleche mit geschichtetem Aufbau im Eingriff bleiben.

Neben den strukturellen Änderungen der Blechlagen während der Wärmebehandlung dehnt sich auch das die Blechlagen umgebende Mantelrohr aus. Nach einer weiteren vorteilhaften Ausgestaltung ist daher vorgesehen, daß eine Vorspannung im Wabenkörper während der Wärmebehandlung durch eine elastische Zwischenlage zwischen Mantelrohr und Wabenkörper aufrechterhalten wird. Die Zwischenlage kompensiert bei der Herstellung auch die unterschiedlichen Schrumpfungen des Mantelrohres und des Wabenkörpers nach dem Abkühlvorgang.

Die Aufrechterhaltung der Vorspannung im Wabenkörper wird auch dadurch begünstigt, daß gemäß einer zusätzlichen vorteilhaften Weiterbildung ein Mantelrohr mit einem geringeren Wärmeausdehnungskoeffizienten als dem des Wabenkörpermaterials verwendet wird.

Die Erfindung wird anschließend anhand von Ausführungsbeispielen, die in den Fig. 1 bis 5 dargestellt sind, noch näher erläutert. Es zeigen:
- Fig. 1: schematisch einen Wabenkörper im Querschnitt,
- Fig. 2: ein Metallblech mit geschichtetem Aufbau,
- Fig. 3: schematisch benachbarte Bleche mit Doppelwellung,
- Fig. 4: schräg gewellte Blechlagen mit sich kreuzender Wellung und
- Fig. 5: den schematischen Aufbau eines Wabenkörpers mit Mikrostruturen.

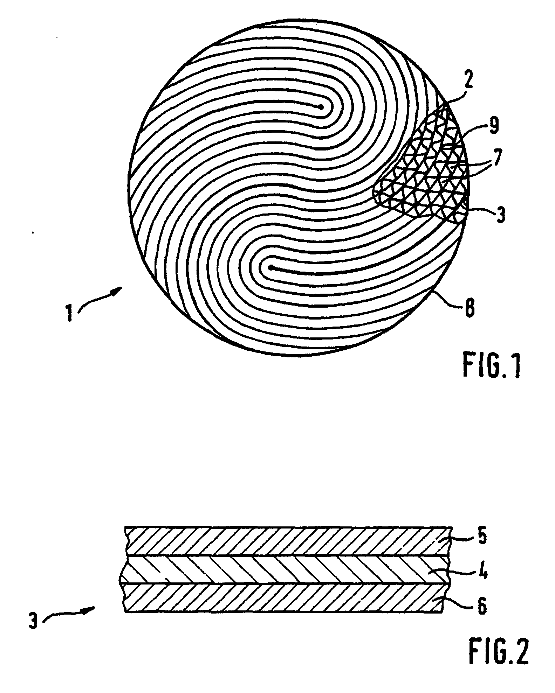

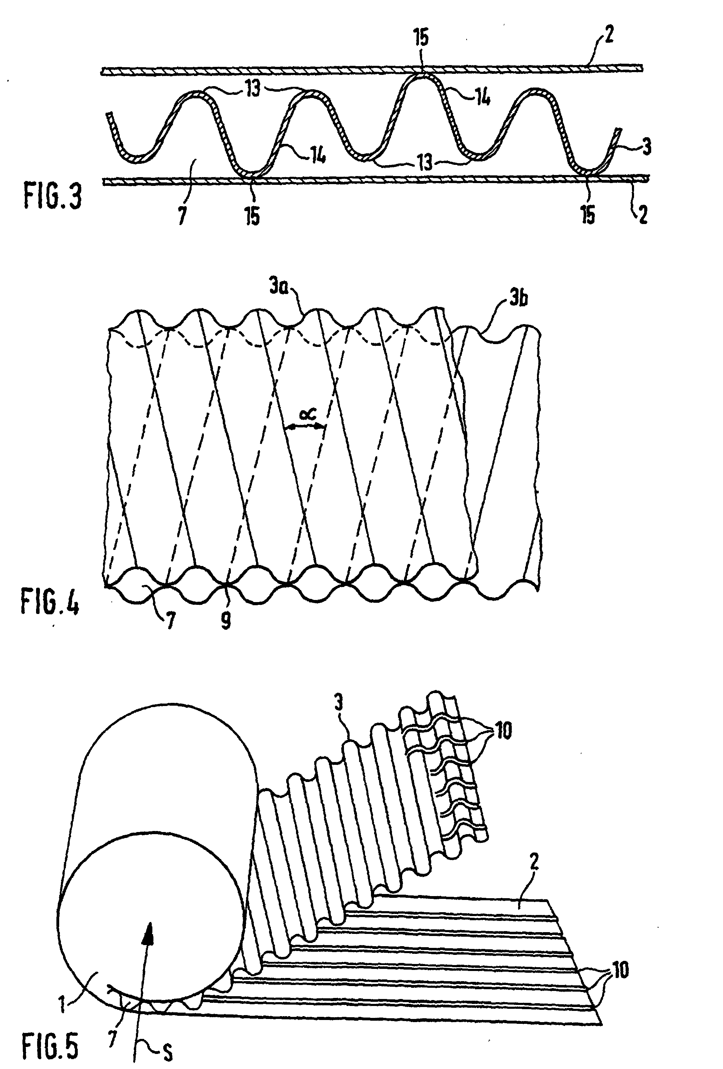

In der Fig. 1 ist ein Wabenkörper 1 dargestellt, bei dem Metallbleche 2, 3 lagenweise geschichtet verschlungen wurden. Die Metallbleche 3 weisen eine Struktur zur Ausbildung von für ein Fluid durchströmbaren Kanälen 7 auf. Die Bleche 3 bestehen zunächst aus einem geschichteten Material, wie in der Fig. 2 dargestellt. Das Blech 3 weist eine innere Schicht 4 aus Chrom enthaltenden Stahl und beidseits dieser Schicht 4 jeweils eine im wesentlichen Aluminium enthaltende Schicht 5, 6 auf. Die Schichten 4, 5 und 6 des Bleches 3 werden bei einer späteren Wärmebehandlung durch Diffusion weitgehend homogenisiert. Eine Ausprägung einzelner Schichten ist nach dem Wärmebehandlungsschritt nicht mehr vorhanden.

In dem dargestellten Ausführungsbeispiel sind die Blechlagen 3, die den geschichteten Aufbau aufweisen, gewellt ausgebildet. Grundsätzlich können auch die glatten Blechlagen oder alle Blechlagen eines Wabenkörpers aus zunächst schichtartig aufgebauten Blechen bestehen.

Die geschichteten und gewickelten Blechlagen sind in ein Mantelrohr 8 eingesetzt, wobei der durch die Blechlagen 2, 3 gebildete Wabenkörper mit einer solchen Vorspannung in das Mantelrohr 8 eingesetzt ist, daß bei der Wärmebehandlung die Berührungsstellen 9 zwischen den Blechlagen in Kontakt bleiben. Dabei hilft eine zusätzlich vorhandene, die Elastizität erhöhende Struktur, wie sie anhand der nächsten Figuren erläutert wird.

In Fig. 3 ist eine von mehreren möglichen Doppelwellungen dargestellt, bei der ein gewelltes Blech Wellenberge 13, 14 unterschiedlicher Amplitude aufweist, so daß nur ein Teil der Wellenmaxima Berührungsstellen 15 mit benachbarten Blechlagen 2 bildet. Ein solches Ergebnis läßt sich auch durch verschiedene Wellungen der benachbarten Lagen erreichen. Jedenfalls wird so die Elastizität des Wabenkörpers während der Herstellung erhöht.

Fig. 4 zeigt eine weitere Möglichkeit zur gleichzeitigen Erhöhung der Elastizität und der Flächenpressung der Berührungsstellen 9 während der Herstellung. Die Blechlagen 3a, 3b sind abwechselnd in unterschiedlicher Ausrichtung schräg gewellt, so daß ihre Wellungen sich mit einem Kreuzungswinkel α kreuzen. Eine solche Ausführungsform ist für die Herstellung und die späteren Strömungseigenschaften günstig.

Wie aus Fig. 5 zu ersehen ist, können die glatten Blechlagen 2 und/oder die gewellten Blechlagen 3 Mikrostrukturen 10 aufweisen, die sich im wesentlichen quer zur Richtung S der Kanäle 7 erstrecken. Durch die Mikrostrukturen 10 der benachbarten Blechlagen 2, 3 werden diese entweder miteinander verklammert, so daß sich die Blechlagen auch bei nur noch sehr geringer Vorspannung während der Wärmebehandlung nicht gegeneinander verschieben können. Oder bei einer eine Verklammerung vermeidenden Anordnung werden die Flächenpressungen der Berührungsstellen erhöht. Jedenfalls steigern die Mikrostrukturen die Elastizität während der Fertigung.

Die Erfindung dient zur Herstellung fortgeschrittener, kostengünstiger, mechanisch belastbarer Wabenkörper mit hoher Korrosionsfestigkeit, insbesondere zur Verwendung als Katalysator-Trägerkörper.

### Bezugszeichenliste:

- 1: Wabenkörper
- 2: glattes Blech
- 3: gewelltes Blech
- 3a, 3b: schräg gewelltes Blech
- 4: innere Schicht
- 5, 6: Aluminiumschicht
- 7: Kanal
- 8: Mantelrohr
- 9: Berührungsstelle
- 10: Mikrostruktur
- 13, 14: Doppelwellung
- 15: Berührungsstelle
- S: Strömungsrichtung
- a: Kreuzungswinkel

## Patentansprüche

1. Verfahren zum Herstellen eines Wabenkörpers (1), bei dem Metallbleche (2, 3; 3a, 3b) lagenweise geschichtet und/oder gewickelt werden, die zumindest teilweise eine Struktur zur Bildung von für ein Fluid durchströmbaren Kanälen (7) aufweisen, wobei zumindest ein Teil der Blechlagen (3) zunächst aus einem geschichteten Material besteht, welches mindestens eine Schicht (4) aus Chrom enthaltendem Stahl und mindestens eine im wesentlichen Aluminium enthaltende, sich durchgehend außen befindende Schicht (5, 6) aufweist, die bei einer späteren Wärmebehandlung durch Diffusion weitgehend homogenisiert werden
**dadurch gekennzeichnet,**
**daß** durch Maßnahmen die Gesamtfläche der Berührungsstellen (9, 15) zwischen den Blechlagen (2, 3, 3a, 3b) verringert wird und der Wabenkörper (1) mit einer solchen Vorspannung in ein Mantelrohr (8) eingesetzt wird, daß bei der Wärmebehandlung die Berührungsstellen (9, 15) zwischen den Blechlagen (2, 3; 3a, 3b) in Kontakt bleiben.

2. Verfahren nach Anspruch 1, **dadurch gekennzeichnet, daß** durch zusätzliche Mikrostrukturen (10) zumindest auf einem Teil der Blechlagen (2, 3) die Gesamtfläche der Berührungsstellen (9) zwischen den Blechlagen verringert und dadurch die zur Aufrechterhaltung der Berührungsstellen (9) während der Wärmebehandlung notwendige Vorspannung verringert wird.

3. Verfahren nach Anspruch 2, **dadurch gekennzeichnet, daß** die zusätzliche Mikrostruktur (10) eine quer oder schräg zur Richtung der Kanäle (7) verlaufende Struktur ist.

4. Verfahren nach Anspruch 2, **dadurch gekennzeichnet, daß** die zusätzliche Mikrostruktur (10) eine im wesentlichen in Richtung der Kanäle verlaufende Struktur ist.

5. Verfahren nach Anspruch 2, 3 oder 4, **dadurch gekennzeichnet, daß** die Mikrostrukturen (10) in benachbarten Blechen so verlaufen, daß keine oder nur eine selten auftretende mechanische Verklammerung durch formschlüssiges Inneinandergreifen benachbarte Mikrostrukturen auftritt.

6. Verfahren nach Anspruch 1, **dadurch gekennzeichnet, daß** die Blechlagen untereinander durch formschlüssig ineinandergreifende Strukturen benachbarter Blechlagen miteinander verklammert sind, so daß sich die Blechlagen auch bei nur noch sehr geringer Vorspannung während der Wärmebehandlung nicht gegeneinander verschieben können.

7. Verfahren nach einem der vorhergehenden Ansprüche, **dadurch gekennzeichnet, daß** eine Vorspannung im Wabenkörpers während der Wärmebehandlung durch eine elastische Zwischenlage zwischen Mantelrohr und Wabenkörper aufrechterhalten wird.

8. Verfahren nach einem der vorhergehenden Ansprüche, **dadurch gekennzeichnet, daß** ein Mantelrohr (8) mit einem geringeren Wärmeausdehnungskoeffizienten als dem des Wabenkörpermaterials verwendet wird.

## Claims

1. Process for the production of a honeycomb body (1), in which metal sheets (2, 3; 3a, 3b) are stacked and/or wound in a layer-wise configuration, which at least in part have a structure for forming channels (7) through which a fluid can flow, wherein at least a part of the sheet metal layers (3) initially comprises a laminate material which has at least one layer (4) of chromium-bearing steel and at least one substantially aluminum-bearing layer (5, 6) being situated continuously outward, which are substantially homogenized in a subsequent heat treatment by diffusion, **characterized in that** by measures the overall surface area of the contact locations (9, 15) in between the sheet metal layers (2, 3, 3a, 3b) is reduced and the honeycomb body (1) is fitted into a tubular casing (8) with such a degree of pre-stress that in the heat treatment the contact locations (9, 15) between the sheet metal layers (2, 3; 3a, 3b) remain in contact.

2. Process according to claim 1, **characterised in that** the overall surface area of the contact locations (9) between the sheet metal layers (2, 3) is reduced by additional microstructures (10) at least on a part of the sheet metal layers (2, 3) and **in that** way the pre-stress necessary to maintain the contact locations (9) during the heat treatment is reduced.

3. Process according to claim 2, **characterised in that** the additional microstructure (10) is a structure which extends transversely or obliquely with respect to the direction of the channels (7).

4. Process according to claim 2, **characterised in that** the additional microstructure (10) is a structure which extends substantially in the direction of the passages.

5. Process according to claim 2, 3, or 4, **characterised in that** the microstructures (10) in adjacent sheet metal layers extend in such a way that a mechanical clamping of adjacent microstructures by engaging one into the other in positively locking relationship does not occur or occurs only rarely.

6. Process according to claim 1, **characterised in that** the sheet metal layers are clamped together by structures of adjacent sheet metal layers engaging one into the other in positively locking relationship, so that the sheet metal layers cannot move relative to each other even with an only still very low degree of pre-stress during the heat treatment.

7. Process according to one of the preceding claims, **characterised in that** pre-stress in the honeycomb body is maintained during the heat treatment by an elastic intermediate layer between the tubular casing and the honeycomb body.

8. Process according to one of the preceding claims, **characterised in that** a tubular casing (8) having a lower coefficient of thermal expansion than that of the honeycomb body material is used.

## Revendications

1. Procédé de fabrication d'un corps en nids d'abeilles (1), dans le cas duquel des tôles métalliques (2, 3 ; 3a, 3b) sont empilées et/ou enroulées en couches, les tôles métalliques (2, 3 ; 3a, 3b) présentant au moins partiellement une structure pour la formation de canaux (7) pouvant être parcourus par un fluide, au moins une partie des couches de tôle (3) étant constituée d'abord d'un matériau stratifié qui présente au moins une couche (4) d'acier contenant du chrome et au moins une couche (5, 6) se trouvant continuellement à l'extérieur et contenant sensiblement de l'aluminium qui lors d'un traitement thermique ultérieur sont largement homogénéisées par diffusion, **caractérisé en ce que** par des opérations l'aire totale des endroits de contact (9, 15) entre les couches de tôle (2, 3, 3a, 3b) est réduite et le corps en nids d'abeilles (1) est placé avec une telle précontrainte dans un tube d'enveloppe (8) que lors du traitement thermique les endroits de contact (9, 15) entre les couches de tôle (2, 3 ; 3a, 3b) restent en contact.

2. Procédé selon la revendication 1, **caractérisé en ce que** par des microstructures supplémentaires (10) l'aire totale des endroits de contact (9) entre les couches de tôle est au moins réduite sur une partie des couches de tôle (2, 3) et que par ce moyen la précontrainte nécessaire pour le maintien des endroits de contact (9) durant le traitement thermique est réduite.

3. Procédé selon la revendication 2, **caractérisé en ce que** la microstructure supplémentaire (10) est une structure qui s'étend transversalement ou obliquement par rapport à la direction des canaux (7).

4. Procédé selon la revendication 2, **caractérisé en ce que** la microstructure supplémentaire (10) est une structure s'étendant sensiblement en direction des canaux.

5. Procédé selon la revendication 2, 3 ou 4, **caractérisé en ce que** les microstructures (10) dans des tôles adjacentes s'étendent de telle manière qu'aucun cramponnage ou qu'un cramponnage mécanique rare par interpénétration par complémentarité de formes de microstructures se produit.

6. Procédé selon la revendication 1, **caractérisé en ce que** les couches de tôles sont cramponnées entre elles par des structures de couches de tôles adjacentes s'interpénétrant par complémentarité de forme, de sorte que même dans le cas de précontrainte encore très faible les couches de tôles ne peuvent pas se déplacer les unes par rapport aux autres.

7. Procédé selon l'une des revendications précédentes, **caractérisé en ce qu'**une précontrainte dans le corps en nids d'abeilles lors du traitement thermique est maintenue par une couche intermédiaire élastique entre le tube d'enveloppe et le corps en nids d'abeilles.

8. Procédé selon l'une des revendications précédentes, **caractérisé en ce qu'**on utilise un tube d'enveloppe (8) avec un coefficient de dilatation thermique plus faible que celui du matériau du corps en nids d'abeilles.
